**Europäisches Patentamt**

**European Patent Office**

**Office européen des brevets**

(19)

(11) Veröffentlichungsnummer: **0 654 502 A2**

## (12) EUROPÄISCHE PATENTANMELDUNG

(21) Anmeldenummer: **94117520.0**

(22) Anmeldetag: **07.11.94**

(51) Int. Cl.6: **C08L 67/02**, C08K 3/00,
//(C08L67/02,23:02)

(30) Priorität: **19.11.93 DE 4339476**

(43) Veröffentlichungstag der Anmeldung:
**24.05.95 Patentblatt 95/21**

(84) Benannte Vertragsstaaten:
**DE ES FR GB IT NL**

(71) Anmelder: **BAYER AG**

**D-51368 Leverkusen (DE)**

(72) Erfinder: **Sarabi, Bahman, Dr.**
**Oelhausenweg 55 A**
**D-47803 Krefeld (DE)**
Erfinder: **Idel, Karsten-Josef, Dr.**
**Am Schwarzkamp 38**
**D-47802 Krefeld (DE)**

(54) **Polyalkylenterephtalat-Spritzgiessformmassen.**

(57) Gegenstand der vorliegenden Erfindung sind glasfaser- und/oder füllstoffverstärkte thermoplastische Polyalkylenterephthalat-Formmassen und die Verwendung von Polyolefinen in Polyalkylenterephthalat-Formmassen, wobei die Formmasse die folgenden Komponenten enthält:

A:  92 bis 99,9, vorzugsweise 95 bis 99,9, insbesondere 96 bis 99,5 Gew.-% Polyalkylenterephthalat,

B:  0,1 bis 8 Gew.-%, vorzugsweise 0,1 bis 5, insbesondere 0,5 bis 4 Gew.-% Polyolefin sowie

C:  10 bis 60, vorzugsweise 10 bis 50 Gew.-% (bezogen auf die Summe der Komponenten A und B Glasfasern und/oder Füllstoffe,

die gegebenenfalls zusätzlich Flammschutzmittel enthalten können.

EP 0 654 502 A2

Gegenstand der Erfindung sind glasfaserverstärkte und/oder mineralverstärkte Polyalkylenterephthalat-Formmassen mit erhöhter Kriechstromfestigkeit zur Herstellung Von Trägern spannungsführender Teile.

Thermoplastische Polyalkvlenterepbthalat-Formmassen, z.B. Polybutylenterephthalat (PBT) oder Polyethylenterephthalat (PET) zeichnen sich durch eine Reihe vorteilhafter Eigenschaften wie hohe Steifigkeit, hohe Lösungsmittelbeständigkeit und gute Verarbeitbarkeit aus. Darüber hinaus besitzen thermoplastische Polyalkvlenterephthalat-Formmassen hohe Wärmeformbeständigkeiten, vor allem dann, wenn sie mit Glasfasern und/oder Füllstoffen verstärkt sind. Aus diesem Grunde werden sie vielfach als glasfaser- und/oder füllstoffverstärkte thermoplastische Formmassen im Maschinenbau, der Automobilindustrie und der Elektro- und Elektroindustrie eingesetzt.

Ihre Anwendbarkeit zur Herstellung von Trägern spannungsführender Teile in der Elektroindustrie, d.h. z.B. zur Herstellung elektrischer Schalter und Schaltorgane sowie elektrischer Steckverbindungen, wird jedoch durch ihre geringe Kriechstromfestigkeit eingeschränkt.

Die Kriechstromfestigkeit einer Formmasse ist ein Maß für die Tendenz zur Ausbildung elektrisch leitfähiger Spuren zwischen zwei Elektroden, die auf die Oberfläche eines Formteils aus dieser Formmasse aufgesetzt sind und zwischen denen eine elektrische Gleichspannung anliegt, wenn die Oberfläche des Formteils verschmutzt ist. Gemessen wird die Kriechstromfestigkeit als comparative tracking index (CTI) gemäß IEC 112 und VDE 0303/1 als die maximale Spannung, bei der sich nach 100 Auftropfungen einer 1 %igen Ammoniumchloridlösung gerade noch keine elektrisch leitfähige Graphitspur auf der Oberfläche des Prüfkörpers zwischen den aufgesetzten Elektroden, die zum Kurzschluß führt, bildet.

Da die Ausbildung derartiger leitfähiger Kriechspuren und die dadurch möglichen Kurzschlüsse zu so starken Erhitzungen der Träger spannungsführender Teile führen können, daß sich diese entzünden, werden zur Herstellung von Trägern Spannungsführender Teile aus Sicherheitsgründen hohe Kriechstromfestigkeiten der Formmassen angestrebt.

Allgemein sind aliphatische Thermoplaste durch hohe Kriechstromfestigkeiten, aromatische Thermoplaste durch niedrige Kriechstromfestigkeiten gekennzeichnet. Da aromatische Thermoplaste jedoch durchweg höhere Wärmeformbeständigkeiten als aliphatische besitzen und leichter flammwidrig eingestellt werden können, wird ihnen trotz ihrer niedrigeren Kriechstromfestigkeit zur Herstellung von Trägern Spannungsführender Teile oft der Vorzug vor aliphatischen Thermoplasten gegeben. Zur Erhöhung der Betriebssicherheit der aus ihnen gefertigten Teile ist jedoch die Erhöhung ihrer Kriechstromfestigkeit erforderlich.

In unverstärkter Form besitzen die Polyalkylenterephthalate, die zu den aromatischen Thermoplasten zu zählen sind, zwar ausreichend hohe Kriechstromfestigkeiten, nicht jedoch dann, wenn sie mit Glasfasern und/oder Füllstoffen verstärkt sind. Es besteht daher die Notwendigkeit, die Kriechstromfestigkeiten von glasfaser- und/oder füllstoffverstärkten Polyalkylenterephthalaten zu erhöhen.

Aufgabe der vorliegenden Erfindung war daher die Entwicklung glasfaser- und/oder füllstoffverstärkter thermoplastischer Polyalkylenterephthalat-Formmassen mit den für diese Stoffklasse charakteristischen vorteilhaften Eigenschaften, jedoch erhöhten Kriechstromfestigkeiten.

Eine weitere Aufgabe der vorliegenden Erfindung war die Entwicklung von flammwidrigen glasfaser- und/oder füllstoffverstärkten Polyalkylenterephthalat-Formmassen mit erhöhten Kriechstromfestigkeiten, da Formmassen, die sowohl flammwidrig als auch kriechstromfest sind, ein besonders hohes Maß an Betriebssicherheit der aus ihnen gefertigten Träger spannungsführender Teilen bieten.

Diese Aufgaben konnten dadurch gelöst werden, daß Polyolefine in Konzentrationen von 0,1 bis 10 Gew.-%, bevorzugt 0,1 bis 5 Gew.-%, bezogen auf das Polyalkylenterephthalat, in die Polyalkylenterephthalate zusammen mit Glasfasern und/oder Füllstoffen sowie gegebenenfalls Flammschutzmitteln eingearbeitet wurden.

Gegenstand der vorliegenden Erfindung sind demnach glasfaser- und/oder füllstoffverstärkte thermoplastische Polyalkylenterephthalat-Formmassen und die Verwendung von Polyolefinen in Polyalkylenterephthalat-Formmassen, wobei die Formmasse die folgenden Komponenten enthält:

A: 92 bis 99,9, vorzugsweise 95 bis 99,9, insbesondere 96 bis 99,5 Gew.-% Polyalkylenterephthalat,

B: 0,1 bis 8 Gew.-%, vorzugsweise 0,1 bis 5, insbesondere 0,5 bis 4 Gew.-% Polyolefin sowie

C: 10 bis 60, vorzugsweise 10 bis 50 Gew.-% (bezogen auf die Summe der Komponenten A und B) Glasfasern und/oder Füllstoffe,

die gegebenenfalls zusätzlich Flammschutzmittel enthalten können.

Thermoplastische Formmassen, aus Gemischen aus Polyalkylenterephthalaten und Polyolefinen, sind bekannt. Beispiele für derartige Formmassen sind Gemische aus Polyethylenterephthalat oder Polybutylenterephthalat und Polypropylen oder Ethylen-Propylen-Copolymeren. Die Komponenten dieser Gemische sind jedoch miteinander unverträglich, so daß aus diesen Gemischen hergestellte Formteile eine Reihe von Nachteilen aufweisen. So sind die Oberflächen der Formteile inhomogen und schuppig, die Formteile selbst sind spröde und brechen schon bei geringen Deformationen. Schließlich sind ihre mechanischen Festigkeiten gering. Diese Nachteile finden sich bei glasfaser- und/oder füllstoffverstärkten Polyalkylenterephthalat-Polyolefin-Gemischen in noch verstärktem Maße. Diese Nachteile sind weiterhin umso ausgeprägter, je mehr sich das Gewichtsverhältnis der Komponenten dem Verhältnis 1:1 nähert.

Aus diesen Gründen können Gemische aus Polyalkylenterephthalat und Polyolefinen nicht für technisch anspruchsvolle Formteile verwendet werden.

Es gibt jedoch Möglichkeiten, die Verträglichkeit von Polyalkylerterephthalaten mit Polyolefinen zu verbessern und so zu technisch brauchbaren thermoplastischen Formmassen zu gelangen. Dies gelingt mit Hilfe folgender Maßnahmen:

a: Zumischen von epoxidgrupperhaltigen Copolymeren des Ethylens oder Propylens, z.B. von Ethylen-Glycidylmethacrylat-Copolymeren, die als Verträglichkeitsvermittler (compatibilizer) fungieren, als weitere Komponente, gegebenenfalls in Kombination mit Bisoxazolin-Verbindungen (EP 0 406 010 A1).

b: Zumischen von Umsetzungsprodukten von Polyalkylenterephthalaten mit epoxidgruppenhaltigen Olefin-Copolymeren als weitere Komponente. Auch diese Umsetzungsprodukte erhöhen die Verträglichkeit von Polyalkylenterephthalaten mit Polyolefinen (EP 0 443 736 A2).

c: Verwendung von Polyolefinen, die geringe Mengen an polaren Gruppen enthalten, anstelle der unpolaren Polyolefine. Derartige durch polare Gruppen modifizierte Polyolefine können beispielsweise sein:

- Polyolefine, auf die Ester oder Anhydride ungesättigter Mono- oder Dicarbonsäuren wie Acrylsäureester oder Maleinsäureanhydrid aufgepfropft worden sind (EP 0 336 320 A2).

Thermoplastische Formmassen, die aus Polyalkylenterephthalaten und 10 bis 50 Gew.-% Polyolefinen nach diesen Verfahren hergestellt worden sind, finden vielfältige Verwendung, da sie die positiven Eigenschaften der Komponenten in sich vereinigen. Besonders häufig werden Gemische aus Polyalkylenterephthalaten und Ethylen-Propylen-Copolymeren (EPM-Kautschuke) oder Ethylen-Propylen-Dien-Copolymeren (EPDM-Kautschuke) verwendet, da sie die Zähigkeit der Polyalkylenterephthalate signifikant erhöhen. Darüber hinaus sind derartige Gemische homogen, besitzen gute mechanische Festigkeiten und hohe Wärmeformbeständigkeiten, wenn sie mit Glasfasern verstärkt werden.

Obwohl homogene Gemische aus Polyalkylenterephthalaten und Polyolefinen seit langem bekannt sind, war es bisher unbekannt und unvorhersehbar, daß Polyolefine schon in sehr kleinen Konzentrationen die Kriechstromfestigkeiten von glasfaser- und/oder füllstoffverstärkten Polyalkylenterephthalaten stark erhöhten. Besonders unerwartet und überraschend ist, daß dies auch der Fall ist bei flammwidrigen glasfaser- und/oder füllstoffverstärkten Polyalkylenterephthalaten, da die üblicherweise verwendeten Flammschutzmittel die Kriechstromfestigkeiten zusätzlich absenken.

Die Erhöhung der Kriechstromfestigkeiten von glasfaser- und/oder füllstoffverstärkten Polyalkylenterephthalaten gelingt vorzugsweise mit nicht durch polare Gruppen modifizierten Polyolefinen und in Abwesenheit der obengenannten Verträglichkeitsvermittler. Trotz der obengenannten Unverträglichkeit der Polyalkylenterephthalate mit Polyolefinen sind die mechanischen und thermischen Eigenschaften der erfindungsgemäßen Formmassen gegenüber den mechanischen und thermischen Eigenschaften der reinen glasfaser- und/oder füllstoffverstärkten Polyalkylenterephthalate kaum verändert.

Die erfindungsgemäßen Formmassen stellen demnach hinsichtlich ihrer Kriechstromfestigkeit eine deutliche Verbesserung gegenüber glasfaser- und/oder füllstoffverstärkten Polyalkylenterephthalaten dar, besitzen aber weiterhin deren vorteilhafte mechanische und thermische Eigenschaften. Sie sind infolgedessen besonders geeignet zur Herstellung von Trägern spannungsführender Teile in der Elektroindustrie.

Es ist natürlich ebenfalls möglich, die Kriechstromfestigkeit von glasfaser- und/oder mineralverstärkten Polyalkylenterephthalaten mit Hilfe von polaren Gruppen enthaltenden Polyolefinen oder mit Hilfe von unpolaren Polyolefinen in Gegenwart von einem der obengenannten Verträglichkeitsvermittler zu erhöhen.

Polyalkylenterephthalate im Sinne der vorliegenden Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen oder Mischungen dieser Diole. Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1993).

Bevorzugte Polyalkylenterephthalate enthalten mindestens 80, vorzugsweise 90 Mol.-% bezogen auf die Dicarbonsäurekomponente, Terephthalsäurereste und mindestens 80, vorzugsweise mindestens 90 Mol.-%, bezogen auf die Diolkomponente, Ethylenglykol- und/oder Butandiol-1,4-reste.

Die bevorzugten Polyalkylenterephthalate können neben Terephthalsäureresten bis zu 20 Mol-% Reste anderer aromatischer Dicarbonsäuren mit 4 bis 12 C-Atomen enthalten, wie Reste von Phthalsäure, Isophthalsäure, Naphthalin-2,6-dicärbonsäure, 4,4'-Diphenyldicarbonsäure, Bernstein-, Adipin-, Sebacin-, Acelain-, Cyclohexandiessigsäure. Die bevorzugten Polyalkylenterephthalate können neben Ethylen- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3,2-Ethylpropandiol-1,3, Neopentylglykol, Pentan-diol-1,5, Hexandiol-1,5, Cyclohexandimethanol-1,4, 3-Methylpentandiol-2,4, 2-Methylpentandiol-2,4, 2-Methylpentandiol-2,4, 2,2,-4-Trimethylpentandiol-1,3 und -1,6,2-Ethylhexandiol-1,3 und -1,6,2-Ethylhexandiol-1,3, 2,2-Diethylpropandiol-1,3, Hexandiol-2,5, 1,3-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-$\beta$-hydroxyethoxyphenyl)-propan und 2,2-bis-(4-hydroxypropoxyphenyl)-propan (DE-OS 24 07 674, 24 07 776, 27 15 932).

Besonders bevorzugt sind Polyalkylenterephthalate, die allein aus Terephthalsäure und deren reaktionsfähigen Derivaten (z.B. Dialkylestern) und Ethylenglykol und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der oben genannten Alkoholkomponenten hergestellt wind. Besonders bevorzugte Copolyester sind Poly-(ethylenglykol/butandiol-1,4)-terephthalate.

Die als Komponente A verwendeten Polyalkylenterephthalate besitzen im allgemeinen eine Intrinsic-Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

Die Polyalkylenterephthalate können allein oder im Gemisch eingesetzt werden.

Erfindungsgemäße Polyolefine, die zur Erhöhung der Kriechstromfestigkeit von glasfaser- und/oder füllstoffverstärkten Polyalkylenterephthalaten geeignet sind, sind Homopolymere des Ethylens, also HD-, LD- und LLD-Polyethylen, des Propylens und von $\alpha$-Olefinen wie 1-Buten, Isobutylen, 1-Penten, 4-Methyl-1-penten oder 1-Hexen, weiterhin Copolymere der genannten Olefine, z.B. Ethylen-Propylen-Copolymere, z.B. EPM-Kautschuke, Copolymere des Ethylens und/oder des Propylens mit einem oder mehreren der obengenannten $\alpha$-Olefine sowie Copolymere des Ethylens und des Propylens mit einem oder mehreren der obengenannten $\alpha$-Olefine sowie Copolymere des Ethylens und des Propylens mit konjugierten oder nicht konjugierten Dienen, z.B. EPDM-Kautschuken. Weitere geeignete Polyolefine sind Copolymere des Ethylens und/oder des Propylens mit Estern ungesättigter Monocarbonsäuren, z.B. der Acryl- und Methacrylsäure, z.B. Methylmethacrylat, Butylacrylat oder Glycidylmethacrylat oder mit Estern ungesättigter Dicarbonsäure, z.B. der Fumarsäure oder der Maleinsäure, z.B. Dimethylfumarat oder Dibutylmaleat sowie schließlich Ainhydride ungesättigter Dicarbonsäuren, z.B. Maleinsäureanhydrid. Es können auch Gemische von Polyolfinen eingesetzt werden. Bevorzugt sind Polyethylen und Polypropylen.

Die eingesetzten Polyethylene und Polypropylene haben im allgemeinen mittlere Molekulargewichte ($\overline{M_w}$) von 50.000 bis 800.000, vorzugsweise 80.000 bis 700.000. Im Falle von Copolymeren beträgt der Anteil an Comonomeren (wie beispielsweise $\alpha$-Olefine, Ester ungesättigter Mono- bzw. Dicarbonsäuren) im allgemeinen bis zu 50 Gew.-%, vorzugsweise bis zu 30 Gew.-%.

Die erfindungsgemäßen Polyalkylenterephthalat-Formmassen sind mit Glasfasern und/oder Füllstoffen verstärkt. Geeignete Füllstoffe sind mineralische oder synthetische Füllstoffe wie Calciumcarbonat, Magnesiumcarbonat, Dolomit, Calciumsulfat, Bariumsulfat, Kaolin, Glimmer, Talkum, Feldspat, Wollastonit, Quarz, Titandioxid oder Glaskugeln.

Von besonderem Interesse sind die erfindungsgemäßen kriechstromfesten Polyalkylenterephthalat-Formmassen, die flammwidrig eingestellt worden sind. Als Flammschutzmittel können diese Formmassen die üblicherweise verwendeten aliphatischen oder aromatischen Chlor- oder Bromverbindungen enthalten. Besonders geeignet sind als Flammischutzmittel beispielsweise Oktachlordiphenyl, Oktabromdiphenyl, Oktachlordiphenyloxid, Oktabromdiphenyloxid, Dekachlordiphenyl, Dekabromdiphenyl, Dekachlordiphenyloxid, Dekabromdiphenyloxid sowie Polycarbonate des Tetrachlor-4-4'-dihydroxydiphenyl-isopropyliden (Tetrabrom-4,4'-dihydroxydiphenyl-isopropyliden (Tetrabrombisphenol A) oder Copolycarbonate dieser halogenierten Bisphenol A-Derivate mit 4,4'-Dihydroxydiphenyl-isopropyliden (Bisphenol A). Diese halogenhaltigen Flammschutzmittel können gegebenenfalls zusammen mit Antimontrioxid zur Erhöhung der Flammwidrigkeit der erfindungsgemäßen kriechstromfesten Polyalkylenterephthalat-Formmassen eingesetzt werden. Die Flammschutzmittel werden im allgemeinen in einer Menge von 15 Gew.-%, vorzugsweise 10 Gew.-%, bezogen auf die Summe aus A + B umgesetzt. Antimontrioxid wird im allgemeinen in einer Menge von 0,5 bis 8, vorzugsweise 1 bis 6 Gew.-% (bezogen auf die Summe aus A + B) zugesetzt.

Weiterhin können die erfindungsgemäßen kriechstromfesten Polyalkylenterephthalat-Formmassen noch die bei Polyalkylenterephthalaten üblichen Zusatzstoffe wie Pigment, Hitze- und Witterungsstabilisatoren sowie Verarbeitungshilfsstoffe wie Gleit- und Entformungshilfsstoffe enthalten.

In den folgenden Beispielen wird exemplarisch belegt, daß der Zusatz von Polyolefinen in geringen Konzentrationen die Kriechstromfestigkeit glasfaser- und glasfaser/mineralverstärkter Polyalkylenterephthalate signifikant erhöht, ohne ihre mechanischen und thermischen Eigenschaften sowie, bei flammwidrigen Einstellungen, ihre Flammwidrigkeit wesentlich zu verschlechtern.

**Beispiele**

Die in den Tabellen 1 und 2 mit ihren Zusammensetzungen aufgeführten Polyalkylenterephthalat-Formmassen wurden auf einem Doppelwellenextruder (ZSK 3L der Fa. Werner & Pfleiderer) bei Temperaturen von 260°C (PBT) bzw. 280°C (PET) hergestellt. Im einzelnen wurden folgende Komponenten zur Herstellung der Formmassen eingesetzt:

Polybutylenterephthalat (PBT): Pocan® B 1509 der Fa. Bayer, Schmelzviskosität: 140 Pa.s bei 260° und einer Scherrate von 1000 $s^{-1}$

Polypropylen (PP): Novolen® 1100, Fa. BASF AG, MVI (Melt Volume Index) = 12 $cm^3$/10 min bei 260°C und einer Belastung von 5kg

Ethylen-Propylen-Copolymer (EPM): Exxelor der Firma Exxon

Glasfasern: OCF FR29 der Fa. Owens Cornning

Talkum: 10 M 00S der Fa. Talc de Lucenac

Flammschutzmittel: Tetrabrombisphenololigocarbonat (TBBOC) Maktechim F 2400 der Fa. Eurobrom

Antimontrioxid: ($Sb_2O_3$)

Die Schmelzen wurden als Rundstränge extrudiert, die anschließend granuliert wurden.

Aus den Granulaten wurden im Falle der Polyalkylenterephthalat-Formmassen bei 240 bis 260°C Massetemperatur und 80°C Werkzeugtemperatur, im Falle der Polyalkylenterephthalat-Formmassen bei 280 bis 300°C Massetemperatur und 140°C Werkzeugtemperatur Prüfkörper gespritzt, an denen folgende Messungen durchgeführt wurden:

- Kriechstromfestigkeit CTI gemäß IEC 112 und VDE 0303/1
- Wärmeformbeständigkeit HDT/A gemäß ISO 75
- Schlagzähigkeit IZOD gemäß ISO 180 Methode 1A
- Brandverhalten bei 1,6 mm Wandstärke gemäß UL 94-V

Die Ergebnisse dieser Prüfungen sind in den Tabellen 1 und 2 aufgeführt.

Tabelle 1

| (Mengenangaben in Gew.-%) | | | | | | | | |
|---|---|---|---|---|---|---|---|---|
| | Vergleichsbeispiele | | | Beispiele | | | | |
| Bezeichnung | 1 | 2 | 3 | 1 | 2 | 3 | 4 | 5 |
| PBT | 70 | 40 | 55,5 | 66 | 65 | 37 | 36 | 66 |
| PP | - | - | - | 4 | - | 3 | - | 4 |
| EPM | - | - | - | - | 5 | - | 4 | - |
| Glasfasern | 30 | 30 | 30 | 30 | 30 | 30 | 30 | 30 |
| Talkum | - | 30 | - | - | - | 30 | 30 | - |
| TBBOC | - | - | 10 | - | - | - | - | 10 |
| $Sb_2O_3$ | - | - | 4,5 | - | - | - | - | 4,5 |
| CTI (Stufe) | 325 | 350 | 175 | 600 | 550 | 600 | 575 | 250 |
| HDT/A (°C) | 210 | 192 | 210 | 205 | 200 | 190 | 187 | 205 |
| Schlagzähigkeit (kJ/m) | 48 | 25 | 45 | 46 | 60 | 24 | 30 | 42 |
| Brandverhalten (UL94) | - | - | V-0 | - | - | - | - | V-0 |

Tabelle 2

| (Mengenangaben in Gew. %) | | | | | | | | |
|---|---|---|---|---|---|---|---|---|
| | Vergleichsbeispiele | | | Beispiele | | | | |
| Bezeichnung | 1 | 2 | 3 | 1 | 2 | 3 | 4 | 5 |
| PBT | 70 | 40 | 59 | 66 | 64 | 55 | 35 | 35 |
| PP | - | - | - | 4 | - | 4 | 5 | - |
| EPM | - | - | - | - | 6 | - | - | 5 |
| Glasfasern | 30 | 30 | 30 | 30 | 30 | 30 | 30 | 30 |
| Talkum | - | 30 | - | - | - | - | 30 | 30 |
| TBBOC | - | - | 8 | - | - | 8 | - | - |
| $Sb_2O_3$ | - | - | 3 | - | - | 3 | - | - |
| CTI (Stufe) | 275 | 300 | 175 | 425 | 400 | 250 | 600 | 575 |
| HDT/A ($°C$) | 236 | 228 | 234 | 231 | 225 | 229 | 223 | 216 |
| Schlagzähigkeit (kJ/m) | 41 | 22 | 38 | 40 | 47 | 39 | 23 | 28 |
| Brandverhalten (UL 94) | - | - | V-0 | - | - | V-0 | - | - |

**Patentansprüche**

1. Thermoplastische Polyalkylenterephthalat-Formmassen aus
   A:      92 bis 99,9 Gew.-% Polyalkylenterephthalat
   B:      0,1 bis 8 Gew.-% Polyolefin
   C:      10 bis 60 Gew.-% (bezogen auf die Summe der Komponenten A + B) Glasfasern und/oder Füllstoffe
   sowie gegebenenfalls zusätzlichen Flammschutzmitteln und gegebenenfalls zusätzlich Antimontrioxid.

2. Thermoplastische Polyalkylenterephthalat-Formmassen gemäß Anspruch 1, dadurch gekennzeichnet, daß die Komponente A Polyalkylenterephthalat, Polyethylenterephthalat oder ein Gemisch aus diesen ist.

3. Thermoplastische Polyalkylenterephthalat-Formmassen gemäß Anspruch 1, dadurch gekennzeichnet, daß die Komponente B Polyethylen, Polypropylen oder ein Copolymerisat aus Ethylen und Propylen oder ein Copolymerisat aus Ethylen und/oder Propylen und einem $\alpha$-Olefin, dem Ester einer ungesättigten Mono- oder Dicarbonsäure oder dem Anhydrid einer ungesättigten Dicarbonsäure ist.

4. Thermoplastische Polyalkylenterephthalat-Formmassen gemäß Anspruch 1, dadurch gekennzeichnet, daß sie als Flammschutzmittel nieder- oder hochmolekulare aromatische oder aliphatische Halogenverbindungen sowie gegebenenfalls Antimontrioxid enthalten.

5. Thermoplastische Polyalkylenterephthalat-Formmassen gemäß Anspruch 1, dadurch gekennzeichnet, daß sie als weitere Zusätze Verarbeitungshilfsmittel, Farbmittel und/oder Stabilisatoren enthalten.

6. Verwendung von Polyalkylenterephthalat-Formmassen gemäß Anspruch 1 zur Herstellung von kriechstromfesten Formkörpern.

7. Verwendung von Polyolefinen in Polyalkylenterephthalat-Formmassen gemäß Anspruch 1 zur Herstellung von kriechstromfesten Formkörpern.

8. Verwendung von Formmassen gemäß Anspruch 1 zur Herstellung von Trägern spannungsführender Teile.